# FASCICULE DE BREVET EUROPEEN

(11) **EP 1 401 227 B1**
(45) Date de publication et mention de la délivrance du brevet: **21.10.2009**
(21) Numéro de dépôt: 03292138.9
(22) Date de dépôt: 29.08.2003
(51) Int. Cl.: H04W 24/00

(54) **Procédé de dimensionnement de l'interface radio pour le trafic GPRS et le trafic GPRS avec voix GSM**
Verfahren zur Messung der Funkschnittstelle für GPRS-Verkehr und GPRS mit GSMS-Sprachverkehr
Method for measuring the radio interface for GPRS traffic and GPRS with GSM voice traffic

(30) Priorité: 23.09.2002 FR 0212005
(43) Date de publication de la demande: 24.03.2004
(73) Titulaire: Société Française du Radiotéléphone-SFR, 75008 Paris (FR)
(72) Inventeur: Fattouch, Imad, 75013 Paris (FR); Parniere, Stéphane, 78100 Saint Germain en Laye (FR)
(74) Mandataire: Debay, Yves

(56) Documents cités:
- WO-A-02/51181
- FR-A- 2 818 852

## Description

La présente invention concerne le dimensionnement du réseau GPRS, et plus particulièrement, pour l'amélioration de la qualité de service dans un tel réseau géré par un opérateur, un procédé de dimensionnement de l'interface radio pour le trafic GPRS et le trafic mixte GPRS + voix GSM.

Il est connu dans l'art antérieur, par le brevet FR 2 818 85, un procédé et une plate-forme pour l'évaluation de la qualité vocale des communications téléphoniques. Ce procédé d'évaluation, mis en oeuvre au moyen d'une plate-forme de mesure, permet de collecter des données se rapportant à la qualité de communications vocales en établissant des connexions entre expérimentateurs. Ce procédé, essentiellement analytique et relatif au seul critère de la qualité vocale, ne peut pas être utilisé pour le dimensionnement du réseau GPRS.

Le réseau GPRS offre une bande passante accrue par rapport au GSM et permet des applications mobiles multimédias. Pour concilier à la fois une qualité de service avec un grand confort d'utilisation et un emploi optimal des ressources radio, il convient de configurer de manière pertinente le nombre de canaux à allouer pour chaque cellule du réseau, ce qui revient à configurer le nombre d'intervalles de temps intermédiaires, appelés time slots ou plus couramment slots par l'homme du métier. Pour cela, un dimensionnement du réseau est effectué afin d'estimer la capacité à ajouter dans le réseau. Cette capacité ajoutée doit permettre à la fois d'écouler le trafic et d'atteindre une certaine qualité de service souhaitée par l'opérateur.

Les solutions apportées dans l'art antérieur (voir par exemple le document WO-A-02/51181) ne prennent en compte ni la problématique de bout en bout, avec toutes les couches protocolaires, ni l'imperfection de l'implantation des algorithmes d'allocation des ressources radio propres au fournisseur. Les méthodes existantes fournissent aussi des résultats théoriques très différents de ceux observés sur le terrain. Il existe un besoin de mieux appréhender la manière dont est répartie la ressource radio dans le réseau GPRS pour dimensionner ce réseau de façon optimale.

La présente invention a donc pour objet de supprimer un ou plusieurs des inconvénients de l'art antérieur en définissant un procédé de dimensionnement de l'interface radio pour le trafic GPRS et le trafic mixte GPRS + voix GSM qui permet de déterminer, pour une configuration de cellule donnée et en fonction d'une qualité de service spécifiée par le marketing, le nombre de canaux qu'il faut réserver pour des applications GPRS.

A cet effet, l'invention concerne un procédé de dimensionnement de l'interface radio pour le trafic GPRS et le trafic mixte GPRS + voix GSM, au moyen d'une plate-forme de test comprenant au moins un modèle de cellule d'un réseau de radiotéléphonie mobile et d'un système de simulation de trafic mémorisant au moins un indicateur de qualité de service, au moins une configuration de cellule ainsi que des volumes des trafics pour la voix GSM et pour les chargements GPRS, procédé caractérisé en ce que :
- des mesures représentatives de la qualité de service pour le GPRS sont effectuées par la plate-forme de test, ces mesures étant réalisées pour différents degrés d'encombrement du trafic GPRS dans ledit modèle de cellule et en fonction du nombre d'intervalles élémentaires de temps dits time slots disponibles pour le trafic GPRS,
- ledit système de simulation de trafic mémorise des données représentatives des mesures réalisées par la plate-forme de test, ces données formant des paramètres de qualité,
- pour au moins une configuration de cellule et pour des volumes déterminés de trafics GSM et chargements GPRS, une pluralité de sessions est générée par ledit système de simulation de trafic, formant des arrivées d'appels GSM et de chargements GPRS, et ledit système de simulation calcule, en tenant compte desdits paramètres de qualité, un degré de performance GPRS réalisé pour ladite configuration de cellule,
- par dichotomie, ladite configuration du modèle de cellule est modifiée par ajout/retrait d'au moins un nouveau time slot disponible pour le trafic GPRS ou d'un équipement d'émission réception, afin de déterminer la configuration minimale permettant audit degré de performance d'atteindre un seuil déterminé.

Selon une autre particularité de l'invention, le système de simulation de trafic estime, pour une configuration de cellule déterminée :
- le nombre de time slots occupés par des appels circuit GSM,
- le nombre de chargements GPRS simultanés,
- le nombre de fenêtres temporelles inoccupées, disponibles pour des chargements GPRS.

Selon une autre particularité, lesdites mesures effectuées par la plate-forme de test sont des mesures unitaires de temps ou de débit de chargement GPRS pour une même application, ledit chargement de cette application étant initié au même instant sur un ou plusieurs ordinateurs de ladite plate-forme.

Selon une autre particularité, lesdites mesures sont effectuées par la plate-forme de test dans les conditions suivantes :
- en champ fort et en condition statique,
- avec déclaration des time slots disponibles pour le GPRS,
- en absence de tout trafic voix GSM.

Selon une autre particularité, le temps de chargement de ladite application est mesuré sur chaque ordinateur, les temps de chargement étant collectés et traités par la plate-forme de test pour obtenir une matrice de résultats de charge en fonction des time slots GPRS et du nombre de chargements simultanés, dite première matrice.

Selon une autre particularité, les données de ladite première matrice sont comparées avec ledit indicateur de qualité de service pour former une matrice, dite deuxième matrice, distinguant les cas favorables où la qualité de service est atteinte, et ceux non favorables où elle ne l'est pas.

Selon une autre particularité, le système de simulation de trafic, pour calculer ledit degré de performance GPRS correspondant à une configuration de cellule, génère une matrice d'occupation des time slots, dite troisième matrice, en fonction du nombre de chargements GPRS simultanés, chaque case de la troisième matrice représentant un pourcentage de temps.

Selon une autre particularité, ledit degré de performance est un taux de performance obtenu par sommation des cases de la troisième matrice correspondant aux cas favorables où la qualité de service est atteinte ou bien un taux de non performance obtenu par sommation des cases complémentaires pour lesquelles la qualité de service n'est pas atteinte.

Selon une autre particularité, ledit indicateur de qualité de service est un objectif de débit moyen par session, pour un type déterminé d'application, ou un débit percentile défini par le critère d'atteinte d'un débit minimum dans un pourcentage déterminé.

Selon une autre particularité, l'objectif de débit moyen de session aux heures de plus fort encombrement du trafic GPRS est un pourcentage de l'objectif de débit en dehors desdites heures de plus fort encombrement.

Un autre but de l'invention est d'apporter une solution à un ou plusieurs des problèmes rencontrés dans l'art antérieur en définissant un système de simulation permettant un dimensionnement rapide et optimal de l'interface radio pour le trafic GPRS et le trafic mixte GPRS + voix GSM.

Ce but est atteint par un système de simulation pour la mise en oeuvre du procédé selon l'invention, destiné au dimensionnement de l'interface radio pour le trafic GPRS et le trafic mixte GPRS + voix GSM, disposant de moyens mémoire des données mémorisées représentatives des résultats de mesures de qualité GPRS en charge effectuées sur une plate-forme de test ou analogue pour un nombre variable de time slots disponibles pour le GPRS, de moyens de mémorisation d'au moins un indicateur de qualité de service, de moyens de mémorisation d'au moins deux configurations de cellule ainsi que de moyens de mémorisation de volumes de trafics GSM et chargements GPRS, caractérisé en ce que le système de simulation utilise ces données pour simuler, par des moyens de génération de sessions et des moyens de sélection d'une configuration de cellule, des arrivées d'appels GSM et de chargements GPRS, pour calculer, par l'intermédiaire de moyens de calcul, un degré de performance GPRS obtenu pour une configuration de cellule sélectionnée.

Selon une autre particularité de l'invention, lesdits moyens de calcul comprennent des moyens de détermination des pourcentages de temps correspondant, dans la cellule sélectionnée, à des états définis par le nombre de time slots disponibles pour des chargements GPRS et le nombre de chargements GPRS simultanés.

Selon une autre particularité de l'invention, des moyens d'analyse prennent en compte lesdites données mémorisées représentatives de mesures de qualité GPRS en charge effectuées sur la plate-forme de test pour distinguer et sélectionner les pourcentages de temps desdits états ne satisfaisant pas ledit indicateur de qualité de service.

L'invention, avec ses caractéristiques et avantages, ressortira plus clairement à la lecture de la description faite en référence aux dessins annexés donnés à titre d'exemples non limitatifs dans lesquels :
- la figure 1 représente le logigramme d'un processus de dimensionnement selon l'invention,
- la figure 2 illustre de manière schématique une plate-forme de service et un exemple de résultats, présentés sous forme d'une matrice, issus d'un test de plate-forme lors du procédé selon l'invention,
- la figure 3 représente un exemple de configuration de la ressource radio d'une cellule,
- la figure 4 représente un exemple de matrice dite de qualité traduisant si la qualité de service est atteinte pour différents états de fonctionnement de la cellule,
- la figure 5 représente schématiquement un mode de réalisation du système de simulation selon l'invention et un exemple, sous forme d'une matrice, de résultats obtenus par ce système,
- la figure 6 représente une courbe d'exploitation des résultats obtenus par le système de simulation selon l'invention.

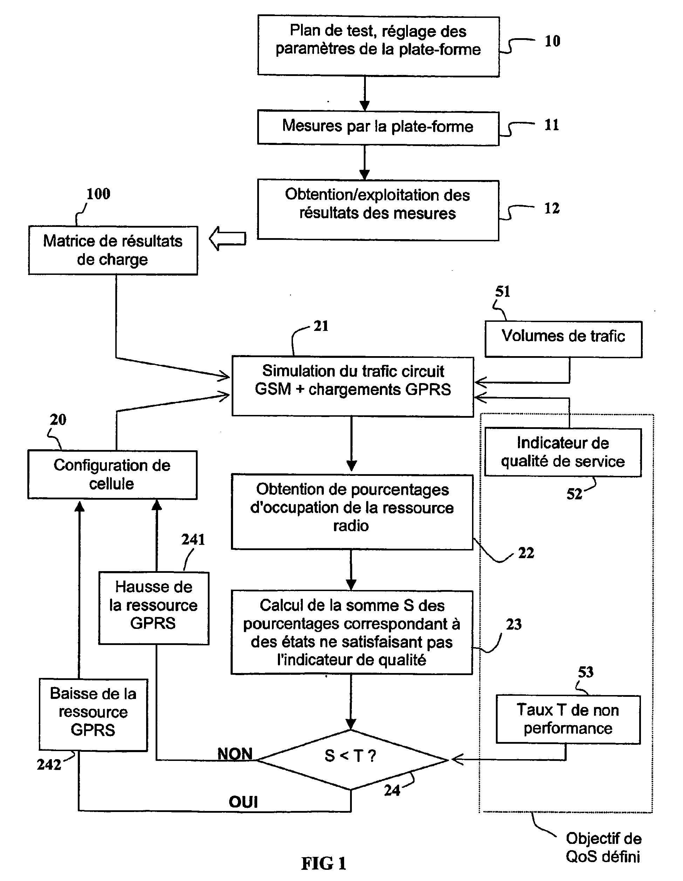

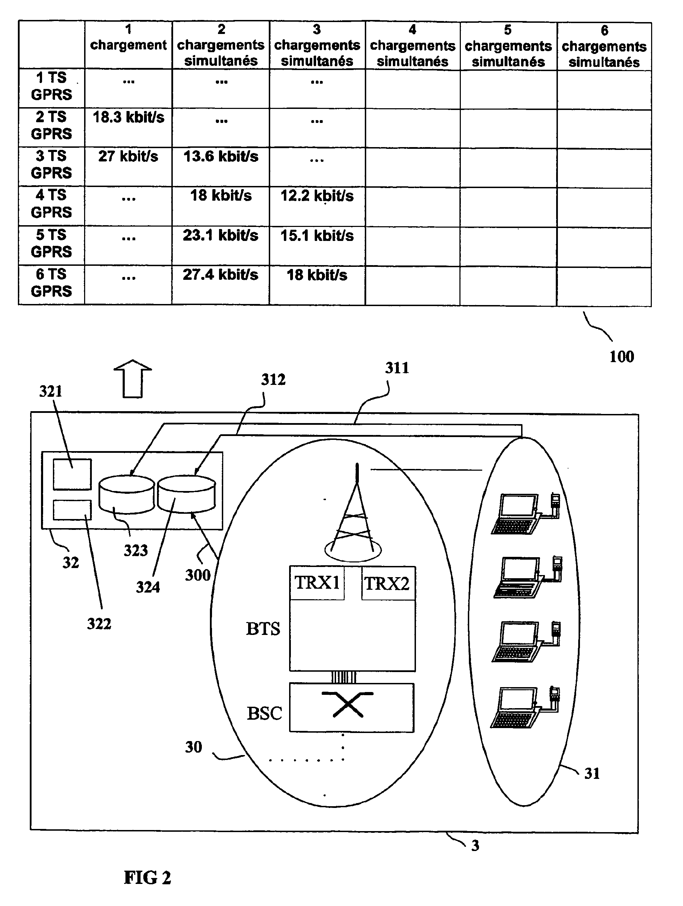

L'invention va à présent être décrite en liaison avec les figures 1 et 2.

La figure 1 représente une variante de réalisation du processus selon l'invention visant à dimensionner le trafic GPRS. Il est préalablement nécessaire d'organiser des tests sur une plate-forme de service (3) comprenant un modèle (30) d'au moins une cellule d'un réseau de radiotéléphonie mobile, comme illustré à la figure 2, afin d'obtenir des indications sur la qualité de chargement GPRS. Un plan de test (10) est réalisé par un programme pour effectuer des mesures représentatives des performances en terme de débit de chargement, de délai de chargement ou de temps d'attente dans la cellule étudiée, appelée cellule modèle (30). Un tel plan de test (10) s'effectue par exemple pour une même application et peut consister à mesurer des temps de chargement d'une page d'accueil sur Internet ou analogue pour un nombre variable de sessions simultanées et de time slots (TS) disponibles pour le trafic GPRS. Un opérateur de la plate-forme (3) peut choisir, dans un menu affichable sur une interface entre la plate-forme (3) et l'opérateur, les paramètres à mesurer ou des caractéristiques du plan de test (10).

La configuration de cellule n'est pas figée pour le plan de test (10) choisi. Comme illustré à la figure 2, la cellule modèle (30) peut comporter une station de base (BTS) dotée par exemple de deux équipements d'émission réception (TRX1, TRX2). Cette station de base (BTS) constitue l'interface entre le contrôleur de station de base (BSC) gérant la ressource radio et les mobiles (31).

Un ensemble de mesures (11) est réalisé suivant ledit plan de test (10) qui fixe certaines conditions à tester. Ainsi les mesures se déroulent par exemple en champ fort et en condition statique, avec déclaration des time slots (TS) disponibles pour le GPRS et en absence de tout trafic sur le circuit voix du GSM sur la cellule modèle (30). Les mobiles (31) peuvent être tous réglés pour un schéma de codage de type CS-2. Des ordinateurs utilisant la cellule modèle (30) du réseau de la plate-forme (3) initient le chargement d'une même application au même instant pour permettre une mesure fiable du temps de transfert de ladite application sur chaque ordinateur, et ensuite en déduire un temps moyen de transfert. Les mesures réalisées peuvent être répétées un nombre de fois défini dans le plan de test, par exemple une quarantaine de fois, afin d'obtenir des résultats moyens pertinents. Pour certaines configurations, le nombre de répétitions peut être diminué, notamment lorsque les mesures (12) donnent des résultats convergents. En faisant varier le nombre de chargements GPRS simultanées dans la cellule modèle (30), et en répétant les mesures pour un nombre croissant de fenêtres temporelles, correspondant aux time slots (TS), disponibles pour les chargements GPRS, les mesures (11) effectuées par la plate-forme (3) permettent d'analyser les configurations de cellule. L'obtention de résultats et leur exploitation (12) permet de générer une matrice (100) récapitulative des tests effectués via la plate-forme (3), comme illustré à la figure 2. Cette matrice (100) contient des résultats représentatifs de la qualité de service dans une cellule en fonction des time slots (TS) GPRS du nombre de chargements simultanés. Ces résultats apparaissent par exemple dans cette matrice (100) sous la forme de débits moyens de transfert.

Dans un mode de réalisation de l'invention, illustré à la figure 2, un gestionnaire d'interface et d'exploitation de données (32), inclus dans la plate-forme (3), permet de collecter et exploiter les mesures (11) réalisées pour un plan de test (10) prédéterminé. Ce gestionnaire d'interface et d'exploitation de données (32) comporte une unité centrale (321), commandée par des logiciels (322) d'une mémoire, une mémoire (324) de données d'état ou de configuration du modèle (30) de la cellule et une mémoire (323) enregistrant les temps de transfert (311) ou les données représentatives des mesures (11) effectuées pendant l'exécution du plan de test (10). Un tel gestionnaire (32) comporte des moyens pour calculer les débits de transfert moyens obtenus en fonction de la configuration du modèle (30) de la cellule, c'est-à-dire en fonction des time slots (TS) disponibles pour le GPRS (300) et du nombre de chargements simultanés (312).

Afin d'assurer une qualité de service satisfaisante et en fonction de spécifications issues du marketing, un seuil minimal de débit de transfert par session peut être défini par l'opérateur de la plate-forme (3), par exemple de 14 kbits/s. Ce type de seuil représente un objectif de qualité souhaité pour le service sur le réseau. Plusieurs seuils peuvent être ainsi définis, par exemple un premier débit de transfert pour les heures chargées pour le GPRS et un deuxième débit de transfert en dehors des heures chargées d'utilisation du réseau. Dans un mode de réalisation de l'invention, l'objectif de débit par session aux heures chargées est un pourcentage du débit en dehors des heures chargées.

La matrice (100) de résultats de charge obtenue à l'issue des essais sur plate-forme (3) informe des paramètres de qualité à prendre en compte pour le dimensionnement de l'interface radio pour les chargements GPRS dans une cellule d'un réseau de radiotéléphonie mobile, par exemple le nombre de time slots (TS) permettant d'obtenir une vitesse de chargement suffisante déterminée. Le processus de dimensionnement selon invention consiste ensuite à simuler (21) le trafic GPRS et le trafic du circuit voix GSM pour une configuration de cellule donnée en fonction de ces paramètres de qualité et de données spécifiées par le marketing.

L'invention va à présent être décrite en relation avec les figures 1, 3, 4, et 5.

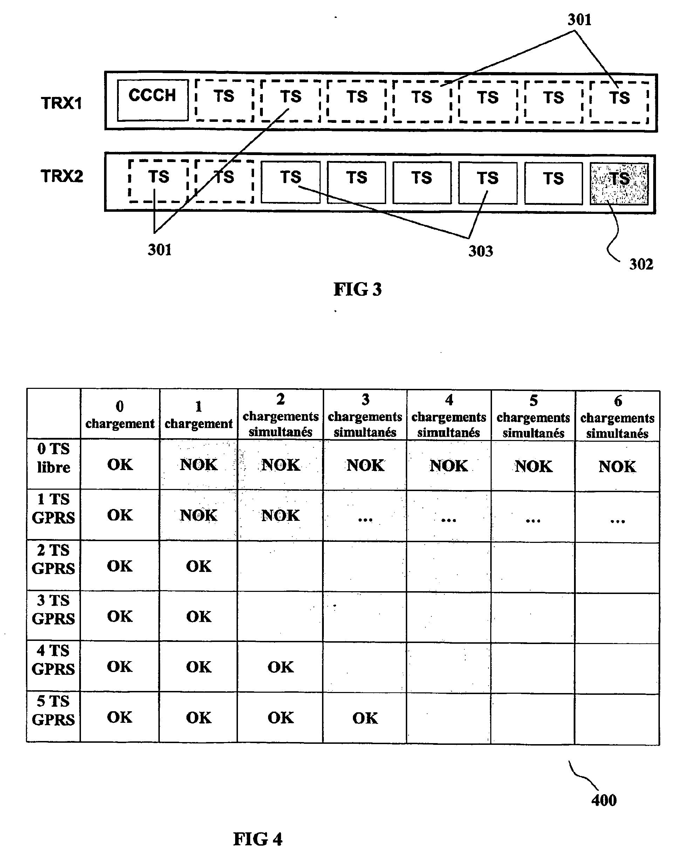

La simulation (21) du trafic GPRS et du circuit voix GSM est réalisée par un système de simulation (4) disposant de données mémorisées représentatives de différentes configurations de cellule et des résultats de mesures (311) de qualité GPRS en charge effectuées sur la plate-forme de test (3). La matrice de résultats de charge (100) peut être ainsi mémorisée dans des moyens mémoire (41) du système de simulation (4). Des données de volumétries régionales ou nationales de trafic (51), par exemple aux heures chargées et par service, sont également mémorisées dans les moyens mémoire (41) du système de simulation (4). Dans un mode de réalisation de l'invention, la session type par application, définie notamment en terme de taille de session et de nombre de pages téléchargées par le marketing, peut être introduite par une interface et aussi mémorisée dans lesdits moyens mémoire (41). Dans une variante de réalisation, un indicateur de qualité de service (52) tel que l'objectif de débit moyen, fixé par le marketing, aux heures chargées est entré comme paramètre supplémentaire dans les moyens mémoire (41) du système de simulation (4). Ledit indicateur (52) peut être également un débit percentile défini par le critère d'atteinte d'un débit minimum dans un pourcentage déterminé, par exemple 90% des cas. Il est possible à ce stade d'analyser la matrice de résultats de charge (100), par l'intermédiaire d'un programme d'analyse (42) du système de simulation (4), et déterminer les conditions ne remplissant pas la spécification marketing. La matrice (400) illustrée à la figure 4, dite matrice de qualité, représente un exemple de résultat fourni par ledit programme d'analyse (42) permettant de distinguer les cas favorables où la qualité de service est atteinte, et ceux non favorables où elle ne l'est pas. A titre illustratif, la matrice (400) de la figure 4 indique que, pour atteindre la qualité de service visée, il faut par exemple au moins quatre time slots (TS) disponibles pour le GPRS lorsque 2 téléchargements sont réalisés simultanément.

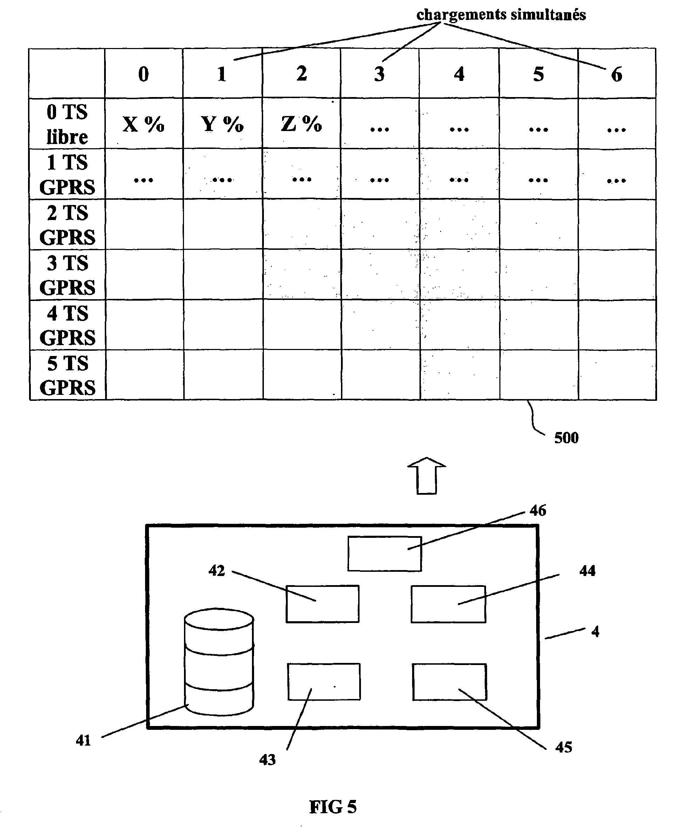

Comme représenté à la figure 5, le système de simulation (4) selon l'invention comporte des moyens de génération de sessions (43) et des moyens de sélection (44) d'une configuration de cellule. Avant de commencer une simulation pour optimiser le dimensionnement de l'interface radio et attribuer un certain nombre de time slots (TS) pour le GPRS, un type de configuration de cellule (20) de réseau est sélectionné à l'aide desdits moyens de sélection (44). La figure 3 illustre schématiquement un exemple de configuration d'une cellule (20) avec une station de base dotée de deux équipements d'émission réception (TRX1, TRX2). Dans l'exemple de la figure 3, la ressource radio se divise en un canal de contrôle commun (CCCH), neuf canaux pour des time slots (TS) dédiés exclusivement à la voix GSM (301), un canal pour un time slot (TS) dédié exclusivement au GPRS (302), et cinq canaux pour des time slots (TS) partagés entre le circuit GSM et le GPRS (303).

Une fois la configuration de cellule sélectionnée (20), le système de simulation (4) se sert des données mémorisées dans ses moyens mémoire (41) pour simuler (21), par l'intermédiaire desdits moyens de génération de sessions (43), des arrivées d'appels circuit GSM et des ordres de chargements GPRS. Le système de simulation (4) simule donc un trafic et estime de manière continue, grâce aux résultats des mesures (311) enregistrés précédemment sur la plate-forme (3) et transférés sur ledit système de simulation (4), pour ladite configuration de cellule sélectionnée :
- le nombre de time slots (TS) occupés par des appels circuit GSM,
- le nombre de chargements GPRS simultanés,
- le nombre de time slots (TS) inoccupés, disponibles pour des chargements GPRS.

A la fin de la simulation du trafic (21), ledit système de simulation (4) calcule, par l'intermédiaire de moyens de calcul (45), des pourcentages d'occupation (22) de la ressource radio. Les pourcentages de temps d'occupation (22) de la ressource radio, établis en fonction du nombre de time slots (TS) disponibles pour le GPRS et du nombre de chargements GPRS simultanés, peuvent être tous rassemblés sous la forme d'une matrice (500), comme illustré à la figure 5. Ledit programme d'analyse (42) permet de distinguer et sélectionner les pourcentages de temps desdits états ne satisfaisant pas ledit indicateur de qualité de service. A partir de ces résultats en pourcentages, et en tenant compte de la sélection effectuée à l'aide du programme d'analyse (42), lesdits moyens de calcul (45) du système de simulation (4) ajoutent tous les pourcentages d'occupation correspondant aux cas défavorables vis-à-vis de la qualité de service visée. Par exemple, comme enseigné par la matrice (400) de la figure 4, tous les cas correspondant à un time slot (TS) disponible GPRS pour un ou plusieurs téléchargements ne satisfont pas la qualité de service espérée. Ce calcul (23) de la somme S des pourcentages correspondant aux cas indésirables est suivi d'une comparaison (24) entre ladite somme S et un taux T de non performance paramétré (53) dans les moyens mémoire (41) du système de simulation (4). La configuration de cellule est considérée comme qualitativement performante si la somme S reste inférieure au taux T de non performance. Dans un mode de réalisation de l'invention, ce taux T de non performance est inférieur à 16%, variant par exemple entre 5 et 10%. Dans une variante de réalisation différente, les moyens de calcul (45) peuvent déterminer la somme des pourcentages correspondant aux cas de satisfaction de la qualité, c'est-à-dire permettant des conditions de chargement atteignant au moins le niveau dudit indicateur de qualité. Dans cette variante, la somme doit dépasser un taux de performance de 100 - T % pour que la qualité visée soit satisfaite. Quelle que soit la variante choisie, le système de simulation (4) permet d'obtenir un degré de performance GPRS représentatif de la qualité réalisée pour la configuration de cellule sélectionnée (20).

Dans le processus selon l'invention, la génération de sessions (21) à l'aide du système de simulation (4), couplée aux mesures unitaires (11) effectuées sur plate-forme (3), permet donc de déterminer une qualité de service correspondant à un trafic entré en paramètre (51) et une configuration de cellule donnée (20).

En fonction du résultat de ladite comparaison (24), la configuration de cellule sélectionnée (20) est modifiée, à l'aide d'un programme de configuration de cellule (46), par ajout/retrait d'au moins un nouveau time slot (TS) disponible pour le trafic GPRS ou d'un équipement d'émission réception (TRX). En procédant par dichotomie, le système de simulation (4) détermine la configuration minimale permettant audit degré de performance d'atteindre un seuil de qualité déterminé. Dans le mode de réalisation de la figure 1, si la somme de pourcentages S est supérieure au taux T de non performance, un time slot (TS) disponible pour le GPRS est ajouté (241) par ledit programme de configuration (46). Pour cela, plusieurs possibilités sont offertes. Suivant l'exemple de la figure 3, dans lequel deux équipements d'émission réception (TRX1, TRX2) fournissent 6 time slots (TS) -dont 5 partagés- disponibles pour le GPRS, un time slot (TS) partagé (303) peut être transformé en time slot (TS) dédié au GPRS (302). Un time slot (TS) dédié à la voix GSM (301) peut aussi être transformé en time slot (TS) partagé (303). Comme l'amélioration de la qualité en GPRS ne doit pas se faire au détriment de la voix GSM, l'ajout d'un time slot (TS) pour le GPRS peut s'effectuer par ajout d'un équipement d'émission réception (TRX) supplémentaire. A la suite de cet ajout (241), une configuration de cellule modifiée en conséquence est sélectionnée (20) et on réitère le processus généré par le système de simulation (4). Tant que la qualité visée n'est pas atteinte, la configuration de cellule est modifiée (20) avec une augmentation de la ressource radio allouée pour le GPRS. L'indicateur de qualité de service (52) et le taux T de non performance (53), paramétrables, permettent de définir l'objectif de qualité de service ou Qos (de l'anglais "quality of service") selon les cas de dimensionnement à traiter.

Toujours dans le mode de réalisation de la figure 1, lorsque la somme de pourcentages S est inférieure au taux T de non performance, une diminution (242) de la ressource radio allouée pour le GPRS est effectuée par l'intermédiaire du programme de configuration de cellule (46). Le processus selon l'invention permet donc par dichotomie de réaliser un dimensionnement de l'interface radio d'une cellule donnée pour un trafic donné (51).

Dans une variante de l'invention, le type de modification à apporter à la configuration de cellule peut être effectué par un opérateur, via une interface de saisie (non représentée) du système de simulation (4).

Dans un mode de réalisation de l'invention, les volumes de trafic entrés en paramètre dans les moyens mémoire (41) du système de simulation (4) sont exprimés en erlang, c'est-à-dire en taux d'occupation de la ressource, et en mégaoctets de sessions WWW ou web ou e-mail ou FTP ou n'importe quel autre modèle de trafic. Le volume de trafic pour le circuit GSM peut correspondre au trafic maximal écoulé par 3 équipements d'émission réception standard (TRX), par exemple pour un taux de blocage circuit de 2%. Ce taux de blocage peut évidemment être ajusté à d'autres valeurs. Le trafic paquet, correspondant aux chargements GPRS, qui est pris en compte dans les volumes de trafic (51) entrés en paramètres est dérivé de prévisions de trafic formulées par le marketing. Ce trafic paquet peut être réparti au prorata de trafic circuit GSM.

Dans une variante de réalisation, les heures de trafic chargées pour le GPRS correspondent aux heures de trafic chargées pour le circuit GSM. La matrice (500) des time slots (TS) libres pour le GPRS en fonction du nombre de sessions simultanées est produite, pour chaque couple de volumes circuit/paquets (51), par les moyens de calcul (45) du système de simulation (4). Ainsi, la deuxième case (Y%) de cette matrice (500), comme illustré à la figure 5, indique le pourcentage de temps aux heures de trafic chargées où il n'y a eu aucun time slot (TS) de libre et une session GPRS.

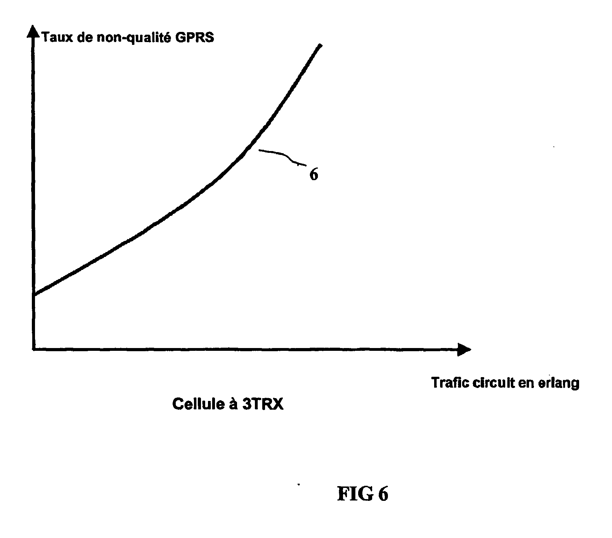

Il est possible d'utiliser les résultats obtenus par le procédé selon l'invention en formant, pour une cellule de configuration fixée, une courbe (6) dudit taux T de non performance, appelé aussi taux de non-qualité GPRS, en fonction du trafic en circuit GSM, comme représenté à la figure 6. Une telle courbe (6) permet de quantifier le nombre de cellules du réseau qui nécessitent un équipement d'émission réception standard (TRX) supplémentaire.

Un des avantages de l'invention réside dans sa facilité de mise en oeuvre, en s'affranchissant d'algorithmes d'allocation de time slots (TS) des constructeurs des infrastructures du réseau. Le processus de dimensionnement selon l'invention implique deux étapes qui restent simples pour déterminer les changements à opérer : l'organisation de tests de qualité en plate-forme et une phase de simulation pour déterminer des configurations prévisionnelles des cellules. L'obtention de résultats de qualité sous la forme d'une matrice (500) peut être rapide et ces résultats permettent de refléter régulièrement, en fonction des évolutions au sein du réseau de radiotéléphonie mobile, la qualité de service obtenue par les utilisateurs. En effet, il est aisé d'évaluer les conséquences des modifications du réseau en faisant des tests sur ladite plate-forme (3).

Un autre avantage est de permettre de tester facilement tout nouvel algorithme ou fonctionnalité mis en oeuvre par la norme ou le fournisseur et de calculer l'impact de ladite fonctionnalité sur le réseau.

Un autre des avantages de l'invention réside dans la gestion améliorée de la ressource radio. La ressource radio allouée au trafic GPRS représente un coût élevé lorsque ce trafic est faible. La ressource radio, chère à installer, peut être mieux utilisée à l'aide du procédé de dimensionnement selon l'invention. Les résultats obtenus par ce procédé peuvent aussi servir à mieux gérer l'offre de service, par exemple en diminuant le coût du service pour l'utilisateur dans les cas où la ressource radio est sous-utilisée.

L'invention vise à satisfaire une qualité de service croissante des besoins en adaptant de manière optimale la configuration de cellule (20) aux diverses évolutions affectant le réseau. L'invention permet par exemple de dimensionner très facilement l'interface radio à la suite d'une augmentation des capacités de communication des téléphones mobiles sur différentes ressources radio. Si des circonstances l'exigent, les paramètres de simulation peuvent être également rapidement modifiés. L'invention donne aussi la possibilité de simuler plusieurs solutions.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de dimensionnement de l'interface radio pour le trafic GPRS et le trafic mixte GPRS + voix GSM, au moyen d'une plate-forme de test (3) comprenant au moins un modèle (30) de cellule d'un réseau de radiotéléphonie mobile et d'un système de simulation de trafic (4) mémorisant au moins un indicateur de qualité de service (52), au moins une configuration de cellule (20) ainsi que des volumes des trafics (51) pour la voix GSM et pour les chargements GPRS, procédé **caractérisé en ce que** :
- des mesures (11) représentatives de la qualité de service pour le GPRS sont effectuées par la plate-forme de test (3), ces mesures (11) étant réalisées pour différents degrés d'encombrement du trafic GPRS dans ledit modèle (30) de cellule et en fonction du nombre d'intervalles élémentaires de temps dits time slots (TS) disponibles pour le trafic GPRS,
- ledit système de simulation de trafic (4) mémorise des données représentatives des mesures (11) réalisées par la plate-forme de test (3), ces données formant des paramètres de qualité,
- pour au moins une configuration de cellule (20) et pour des volumes déterminés de trafics GSM et chargements GPRS (51), une pluralité de sessions est générée (21) par ledit système de simulation de trafic (4), formant des arrivées d'appels GSM et de chargements GPRS, et ledit système de simulation calcule (22, 23), en tenant compte desdits paramètres de qualité, un degré de performance GPRS réalisé pour ladite configuration de cellule (20),
- par dichotomie, ladite configuration (20) du modèle (30) de cellule est modifiée par ajout/retrait (241, 242) d'au moins un nouveau time slot (TS) disponible pour le trafic GPRS (300) ou d'un équipement d'émission réception (TRX), afin de déterminer la configuration minimale permettant audit degré de performance d'atteindre un seuil déterminé.

2. Procédé selon la revendication 1, dans lequel le système de simulation de trafic (4) estime, pour une configuration de cellule (20) déterminée :
- le nombre de time slots (TS) occupés par des appels circuit GSM,
- le nombre de chargements GPRS simultanés (312),
- le nombre de fenêtres temporelles inoccupées, disponibles pour des chargements GPRS (300).

3. Procédé selon la revendication 1 ou 2, dans lequel lesdites mesures (11) effectuées par la plate-forme de test (3) sont des mesures unitaires de temps (311) ou de débit de chargement GPRS pour une même application, ledit chargement de cette application étant initié au même instant sur un ou plusieurs ordinateurs de ladite plate-forme (3).

4. Procédé selon l'une quelconque des revendications 1 à 3, dans lequel lesdites mesures (11) sont effectuées par la plate-forme de test (3) dans les conditions suivantes :
- en champ fort et en condition statique,
- avec déclaration des time slots (TS) disponibles pour le GPRS (300),
- en absence de tout trafic voix GSM.

5. Procédé selon la revendication 3 ou 4, dans lequel le temps de chargement (311) de ladite application est mesuré sur chaque ordinateur, les temps de chargement (311) étant collectés et traités par la plate-forme de test (3) pour obtenir une matrice de résultats de charge (100) en fonction des time slots (TS) GPRS (300) et du nombre de chargements simultanés (312), dite première matrice (100).

6. Procédé selon la revendication 5, dans lequel les données de ladite première matrice (100) sont comparées avec ledit indicateur de qualité de service (52) pour former une matrice (400), dite deuxième matrice, distinguant les cas favorables où la qualité de service est atteinte, et ceux non favorables où elle ne l'est pas.

7. Procédé selon l'une quelconque des revendications 1 à 6, dans lequel le système de simulation de trafic (4), pour calculer ledit degré de performance GPRS correspondant à une configuration de cellule (20), génère une matrice (500) d'occupation des time slots (TS), dite troisième matrice, en fonction du nombre de chargements GPRS simultanés (312), chaque case de la troisième matrice (500) représentant un pourcentage de temps.

8. Procédé selon la revendication 7, dans lequel ledit degré de performance est un taux de performance obtenu par sommation des cases de la troisième matrice (500) correspondant aux cas favorables où la qualité de service est atteinte ou bien un taux de non performance (S) obtenu par sommation des cases complémentaires pour lesquelles la qualité de service n'est pas atteinte.

9. Procédé selon l'une quelconque des revendications 1 à 8, dans lequel ledit indicateur de qualité de service (52) est un objectif de débit moyen par session, pour un type déterminé d'application, ou un débit percentile défini par le critère d'atteinte d'un débit minimum dans un pourcentage déterminé.

10. Procédé selon la revendication 9, dans lequel l'objectif de débit moyen de session aux heures de plus fort encombrement du trafic GPRS est un pourcentage de l'objectif de débit en dehors desdites heures de plus fort encombrement.

11. Système de simulation (4) pour la mise en oeuvre du procédé selon l'une des revendications 1 à 10, destiné au dimensionnement de l'interface radio pour le trafic GPRS et le trafic mixte GPRS + voix GSM, disposant de moyens mémoire (41) des données mémorisées représentatives des résultats de mesures (11) de qualité GPRS en charge effectuées sur une plate-forme de test (3) ou analogue pour un nombre variable de time slots (TS) disponibles pour le GPRS (300), de moyens de mémorisation (41) d'au moins un indicateur de qualité de service (52), de moyens de mémorisation (41) d'au moins deux configurations de cellule (20) ainsi que de moyens de mémorisation (41) de volumes des trafics GSM et chargements GPRS (51), **caractérisé en ce que** le système de simulation (4) utilise ces données pour simuler (21), par des moyens de génération de sessions (43) et des moyens de sélection (44) d'une configuration de cellule (20), des arrivées d'appels GSM et de chargements GPRS, pour calculer, par l'intermédiaire de moyens de calcul (45), un degré de performance GPRS obtenu pour une configuration de cellule (20) sélectionnée.

12. Système de simulation selon la revendication 11, dans lequel lesdits moyens de calcul (45) comprennent des moyens de détermination des pourcentages de temps correspondant, pour la configuration de cellule (20) sélectionnée, à des états définis par le nombre de time slots (TS) disponibles pour des chargements GPRS (300) et le nombre de chargements GPRS simultanés (312).

13. Système de simulation selon la revendication 12, dans lequel des moyens d'analyse (46) prennent en compte lesdites données mémorisées représentatives de mesures (11) de qualité GPRS en charge effectuées sur la plate-forme de test (3) pour distinguer et sélectionner les pourcentages de temps desdits états ne satisfaisant pas ledit indicateur de qualité de service (52).

## Claims

1. Method of dimensioning the radio interface for GPRS traffic and mixed GPRS + voice GSM traffic, by means of a test platform (3) comprising at least one cell model (30) of a mobile radiotelephone network and a traffic simulation system (4) which memorises at least one service quality indicator (52), at least one cell configuration (20) as well as traffic volumes (51) for voice GSM and for GPRS data transfers, this method being **characterised in that**:
- measurements (11) representing the quality of service for the GPRS are carried out by the test platform (3), these measurements being performed for different volumes of GPRS traffic in the said cell model (30) and as a function of the number of time slots (TS) available for GPRS traffic,
- the said traffic simulation system (4) memorises data representing measurements (11) carried out by the test platform (3), these data forming quality parameters,
- for at least one cell configuration (20) and for defined volumes of GSM traffic and GPRS data transfers (51), a plurality of sessions is generated (21) by the said traffic simulation system (4), forming arrivals of GSM calls and GPRS data transfers, and taking account of the said quality parameters the said simulation system calculates (22, 23) a level of GPRS performance achieved for the said cell configuration (20).
- by dichotomy, the said configuration (20) of the cell model (30) is modified by addition/removal (241, 242) of at least one new time slot (TS) available for the GPRS traffic (300) or of a transceiver (TRX), in order to determine the minimum configuration enabling the said level of performance to attain a defined threshold.

2. Method as claimed in Claim 1, wherein for a defined cell configuration (20) the traffic simulation system (4) estimates:
- the number of time slots (TS) occupied by GSM circuit calls,
- the number of simultaneous transfers of GPRS data (312),
- the number of unoccupied time slots available for GPRS data transfers (300).

3. Method as claimed in Claim 1 or 2, wherein the said measurements (11) performed by the test platform (3) are measurements of time units (311) or GPRS data transfer rates for loading of one and the same application, the said loading of this application being initiated at the same moment on one or more computers of the said platform (3).

4. Method as claimed in any one of Claims 1 to 3, wherein the said measurements (11) are performed by the test platform (3) under the following conditions:
- in a strong field and in a static state,
- with declaration of the time slots (TS) available for the GPRS (300),
- in the absence of any voice GSM traffic.

5. Method as claimed in any one of Claims 3 or 4, wherein the time for loading (311) of the said application is measured on each computer, the loading times (311) being collected and processed by the test platform (3) in order to obtain a matrix of loading results (100) as a function of the GPRS time slots (TS) (300) and of the number of simultaneous transfers of data (312), referred to as a first matrix (100).

6. Method as claimed in Claim 5, wherein the data of the said first matrix (100) are compared with the said service quality indicator (52) in order to form a matrix (400), referred to as the second matrix, which distinguishes the favourable cases in which the service quality is attained and those unfavourable cases in which it is not.

7. Method as claimed in any one of Claims 1 to 6, wherein in order to calculate the said level of GPRS performance corresponding to a cell configuration (20) the traffic simulation system (4) generates a matrix (500) of occupation of the time slots (TS), referred to as a third matrix, as a function of the number of simultaneous transfers of GPRS data (312), each division in the third matrix (500) representing a time percentage.

8. Method as claimed in Claim 7, wherein the said level of performance is a performance rate obtained by summation of the divisions of the third matrix (500) corresponding to the favourable cases where the service quality is attained or else a rate of non-performance obtained by summation of the complementary divisions for which the service quality is not attained.

9. Method as claimed in any one of Claims 1 to 8, wherein the said service quality indicator (52) is a mean session rate target, for a defined type of application, or a percentile rate defined by the criterion of attaining a minimum rate within a defined percentage.

10. Method as claimed in Claim 9, wherein the mean session rate target at times of the highest GPRS traffic volume is a percentage of the target rate outside the said times of highest traffic volume.

11. Simulation system (4) for implementation of the method as claimed in any one of Claims 1 to 10, intended for dimensioning of the radio interface for the GPRS traffic and the mixed GPRS + voice GSM traffic, having memory means (41) for storage of the memorised data representing measurement results (11) of GPRS loading quality performed on a test platform (3) or the like for a variable number of time slots (TS) available for the GPRS (300), memory means (41) for storage of at least one service quality indicator (52), memory means (41) for storage of at least two cell configurations (20) as well as memory means (41) for storage of GSM traffic and GPRS loading volumes (51), **characterised in that** the simulation system (4), by employing session generation means (43) and means for selection (44) of a cell configuration (20), uses these data for simulation (21) of arrivals of GSM calls and GPRS data transfers, in order by way of calculation means (45) to calculate a level of GPRS performance obtained for a selected cell configuration (20).

12. Simulation system as claimed in Claim 11, wherein the said calculation means (45) comprise means for determination of the time percentages corresponding, for the selected cell configuration (20), to states defined by the number of time slots (TS) available for GPRS data transfers (300) and the number of simultaneous GPRS data transfers (312).

13. Simulation system as claimed in Claim 12, wherein analysis means (46) take into account the said memorised data representing GPRS transfer quality measurements (11) performed on the test platform (3) in order to distinguish and select the time percentages of the said states which do not satisfy the said service quality indicator (52).

## Patentansprüche

1. Verfahren zum Dimensionieren der Funkschnittstelle für den GPRS-Verkehr (GPRS, engl. General Packet Radio Service [allgemeiner Paket-FunkDienst]) und den gemischten GPRS+Sprach-GSM-Verkehr (GSM, engl. Global System for Mobile Communications [Globales Mobilkommunikationssystem]) mittels einer Testplattform (3), die aufweist: mindestens ein Zellenmodell (30) eines Mobilfunknetzes und eines Systems zur Verkehrs-Simulation (4), das mindestens einen Dienstqualitätsindikator (52), mindestens eine Zellenkonfiguration (20) sowie Verkehrsvolumina (51) für Sprach-GSM und für das GPRS-Laden speichert, wobei das Verfahren **dadurch gekennzeichnet ist, dass**:
- Messungen (11), die für die GPRS-Dienstqualität repräsentativ sind, mittels der Testplattform (3) durchgeführt werden, wobei die Messungen (11) für unterschiedliche GPRS-Verkehrsüberlastungsgrade in dem Zellenmodell (30) und in Abhängigkeit von der Anzahl elementarer Zeitintervalle, die als Zeitschlitze (engl. Time Slots) (TS) bezeichnet werden, die für den GPRS-Verkehr verfügbar sind, durchgeführt werden,
- das Verkehrs-Simulationssystem (4) Daten speichert, die für die Messungen (11) repräsentativ sind, die mittels der Testplattform (3) durchgeführt werden, wobei diese Daten Qualitätsparameter bilden,
- von dem Verkehrs-Simulationssystem (4) für mindestens eine Zellenkonfiguration (20) und für bestimmte GSM-Verkehr- und GPRS-Lade-Volumina (51) eine Mehrzahl von Sitzungen erzeugt wird (21), wobei Eingänge von GSM-Anrufen und GPRS-Ladungen erzeugt werden, und das Simulationssystem (22, 23) unter Berücksichtigung der Qualitätsparameter einen GPRS-Leistungsgrad berechnet, der für die Zellenkonfiguration (20) realisiert wird, und dass
- mittels Dichotomie die Konfiguration (20) des Zellenmodells (30) durch Hinzufügen/Entfernen (241, 242) mindestens eines neuen für den GPRS-Verkehr (300) verfügbaren Zeitschlitzes (TS) oder einer Sende-Empfangs-Einrichtung (TRX) modifiziert wird, um die Minimalkonfiguration zu bestimmen, die dem Leistungsgrad das Erreichen einer bestimmten Schwelle ermöglicht.

2. Verfahren gemäß Anspruch 1, wobei das Verkehrs-Simulationssystem (4) für eine bestimmte Zellenkonfiguration (20) folgendes schätzt:
- die Anzahl von Zeitschlitzen (TS), die durch GSM-Leitungs-Anrufe besetzt sind,
- die Anzahl von gleichzeitigen GPRS-Ladungen (312), und
- die Anzahl von nicht besetzten Zeitfenstern, die für GPRS-Ladungen (300) verfügbar sind.

3. Verfahren gemäß Anspruch 1 oder 2, wobei die Messungen (11), die mittels der Testplattform (3) durchgeführt werden, Einheitsmessungen in Bezug auf die Zeit (311) oder den GPRS-Lade-Durchfluss für eine gleiche Anwendung sind, wobei das Laden der Anwendung zum selben Zeitpunkt auf einem oder mehreren Rechnern der Plattform (3) initiiert wird.

4. Verfahren gemäß einem der Ansprüche 1 bis 3, wobei die Messungen (11) mittels der Testplattform (3) unter den folgenden Bedingungen durchgeführt werden:
- in einem starken Feld und in einem statischen Zustand,
- mit Angabe der Zeitschlitze (TS), die für den GPRS-Dienst (300) verfügbar sind, und
- in Abwesenheit von jeglichem Sprach-GSM-Verkehr.

5. Verfahren gemäß Anspruch 3 oder 4, wobei die Ladezeit (311) der Anwendung auf jedem Rechner gemessen wird, wobei die Ladezeiten (311) mittels der Testplattform (3) gesammelt und verarbeitet werden, um eine als erste Matrix (100) bezeichnete Lade-Ergebnis-Matrix (100) in Abhängigkeit von den GPRS- (300) Zeitschlitzen (TS) und der Anzahl von gleichzeitigen Ladungen (312) zu erhalten.

6. Verfahren gemäß Anspruch 5, wobei die Daten der ersten Matrix (100) mit dem Dienstqualitätsindikator (52) verglichen werden, um eine Matrix (400) zu bilden, die als zweite Matrix bezeichnet wird, die zwischen den günstigen Fällen, in denen die Dienstqualität erreicht wird, und den ungünstigen Fällen, in denen die Dienstqualität nicht erreicht wird, unterscheidet.

7. Verfahren gemäß einem der Ansprüche 1 bis 6, wobei das Verkehrs-Simulationssystem (4) zum Berechnen des GPRS-Leistungsgrades entsprechend einer Zellenkonfiguration (20) eine als dritte Matrix bezeichnete Matrix (500) für die Besetzung der Zeitschlitze (TS) in Abhängigkeit von der Anzahl gleichzeitiger GPRS-Ladungen (312) erzeugt, wobei jedes Feld der dritten Matrix (500) einen Zeit-Prozentanteil repräsentiert.

8. Verfahren gemäß Anspruch 7, wobei der Leistungsgrad entweder eine Leistungsrate, die durch Summieren der Felder der dritten Matrix (500), die den günstigen Fällen entsprechen, in denen die Dienstqualität erreicht wird, oder eine Nicht-Leistungsrate (S) ist, die durch Summieren der komplementären Felder erhalten wird, bei denen die Dienstqualität nicht erreicht wird.

9. Verfahren gemäß einem der Ansprüche 1 bis 8, wobei der Dienstqualitätsindikator (52) ein Durchschnittsratenziel pro Sitzung für einen bestimmten Anwendungstyp oder eine Perzentilrate ist, die durch das Kriterium des Erreichens eines minimalen Durchflusses in einem bestimmten Prozentanteil definiert wird.

10. Verfahren gemäß Anspruch 9, wobei das Durchschnittsratenziel pro Sitzung zu den Zeiten der stärksten Überlastung des GPRS-Verkehrs ein Prozentanteil des Durchflussziels außerhalb der Zeiten der stärksten Überlastung ist.

11. Simulationssystem (4) zum Durchführen des Verfahrens gemäß einem der Ansprüche 1 bis 10, das für das Dimensionieren der Funkschnittstelle für den GPRS-Verkehr und den gemischten GPRS+Sprach-GSM-Verkehr vorgesehen ist, das aufweist: Mittel zum Speichern (41) der gespeicherten Daten, die für die Ergebnisse von Messungen (11) der GPRS-Qualität beim Laden repräsentativ sind, die auf einer Testplattform (3) oder dergleichen für eine variable Anzahl von für das GPRS (300) verfügbaren Zeitschlitzen (TS) durchgeführt werden, Mittel zum Speichern (41) mindestens eines Dienstqualitätsindikators (52), Mittel zum Speichern (41) mindestens zweier Zellenkonfigurationen (20) sowie Mittel zum Speichern (41) von GSM-Verkehrs- und GPRS-Lade-Volumina (51), **dadurch gekennzeichnet, dass** das Simulationssystem (4) diese Daten zum Simulieren (21) von Eingängen von GSM-Anrufen und GPRS-Ladungen mittels Mitteln zum Erzeugen von Sitzungen (43) und Mitteln zum Auswählen (44) einer Zellenkonfiguration (20) verwendet, um mittels Rechenmitteln (45) einen GPRS-Leistungsgrad zu berechnen, der für eine ausgewählte Zellenkonfiguration (20) erhalten wird.

12. Simulationssystem gemäß Anspruch 11, wobei die Rechenmittel (45) Mittel zum Bestimmen der Zeit-Prozentanteile aufweisen, die für die ausgewählte Zellenkonfiguration (20) Zuständen entsprechen, die durch die Anzahl von Zeitschlitzen (TS), die für GPRS-Ladungen (300) verfügbar sind, und die Anzahl von gleichzeitigen GPRS-Ladungen (312) definiert werden.

13. Simulationssystem gemäß Anspruch 12, wobei Analysemittel (46) die gespeicherten Daten berücksichtigen, die für Messungen (11) der GPRS-Qualität beim Laden repräsentativ sind, die auf der Testplattform (3) durchgeführt werden, um die Zeit-Prozentanteile der Zustände zu unterscheiden und auszuwählen, die den Dienstqualitätsindikator (52) nicht erfüllen.
